## Europäisches Patentamt
## European Patent Office
## Office européen des brevets

(11) Veröffentlichungsnummer: **0 221 304**
**B1**

# (12) EUROPÄISCHE PATENTSCHRIFT

(45) Veröffentlichungstag der Patentschrift:
**04.04.90**

(21) Anmeldenummer: **86112805.6**

(22) Anmeldetag: **16.09.86**

(51) Int. Cl.⁴: **H02K 11/00,** H02K 3/22,
H02K 5/12

(54) Kommutatormotor in geschlossener Bauart.

(30) Priorität: **30.09.85 DE 3534924**

(43) Veröffentlichungstag der Anmeldung:
**13.05.87 Patentblatt 87/20**

(45) Bekanntmachung des Hinweises auf die Patenterteilung:
**04.04.90 Patentblatt 90/14**

(84) Benannte Vertragsstaaten:
**DE FR GB IT**

(56) Entgegenhaltungen:
**DE-A- 2 422 410**
**DE-A- 2 739 408**
**DE-B- 2 813 956**
**FR-A- 2 499 328**
**GB-A- 1 317 424**
**US-A- 2 590 559**
**US-A- 4 329 605**

(73) Patentinhaber: **Siemens Aktiengesellschaft,
Wittelsbacherplatz 2, D-8000 München 2(DE)**

(72) Erfinder: **Adam, Peter, Allerseeweg 25,
D-8706 Höchberg(DE)**
Erfinder: **Seuffert, Werner, Mainstrasse 9,
D-8722 Bergrheinfeld(DE)**

## Beschreibung

Die Erfindung bezieht sich auf einen Kommutatormotor in geschlossener Bauart gemäß Oberbegriff des Anspruchs 1; ein derartiger Kommutatormotor ist durch die DE-B1-28 13 956 bekannt.

Bei dieser bekannten Anordnung ragen die inneren Anschlußenden in das Motorgehäuse hinein und sind dort unter Zwischenschaltung von Entstörmitteln mit den Kohlebürsten verbunden.

Durch die US-A-2 590 559 ist es zum elektrischen Anschluß eines kommutator- und bürstenlosen Motors bekannt, die Anschlußleitungen durch in einzelne Motorgehäuseöffnungen radial eingesetzte Isolierteile nach außen herauszuführen und in einem gesonderten auf dem Motorgehäuse festgeschraubten Anschlußkasten mit radial vorstehenden Anschlußschraubstiften zu befestigen, an die äußere Speiseleitungen, axial zugeführt, anschließbar sind. Der Anschlußkasten besteht aus einem ersten geschlossenen Blechgehäuseteil mit darin auf einem weiteren Isolierteil motorseitig befestigten Kondensator und axial über die Anschlußschrauben vorstehenden Befestigungsfingern, auf die nach dem Anschluß der äußeren Speiseleitungen eine Isolierkappe übersteckbar ist.

Durch die US-A-4 329 605 ist weiterhin ein Kraftfahrzeug-Kommutatormotor mit einer Bürstentragplatte in einem Motorgehäuse und einem davon gesonderten, radial außen auf dem Motorgehäuse befestigten Isoliergehäuse mit in einer zum Motorgehäuse nach radial innen verschließbaren Tasche für einen Entstörkondensator bekannt, wobei die äußeren Speiseleitungen in dem Isoliergehäuse mit den inneren elektrischen Leitungen fest verclipst sind.

Die vorbeschriebene bekannte Anordnung ist dann nicht anwendbar, wenn aus betrieblichen Gründen oder mangels zu geringer Motorgröße die Entstörmittel und die Kontaktierung nach außerhalb des Motorgehäuses verlegt werden müssen. Die vorliegende Erfindung geht von einer solchen Forderung aus; dabei soll in fertigungstechnisch einfacher, insbesondere für den Einsatz von Fertigungsautomaten vorteilhafter Weise, ein Motor in geschlossener Bauart geschaffen werden, der insbesondere bei Einsatz als Pumpenmotor absoluten Schutz der Entstörmittel, der elektrischen Anschlüsse sowie der gesamten Bürstenapparatur gegenüber aggresiven dampfförmigen und flüssigen Medien gewährleisten kann.

Die Lösung dieser Aufgabe gelingt bei einem Kommutatormotor der eingangs genannten Art durch die Lehre der Ansprüche 1 bzw. 6; vorteilhafte Ausgestaltungen der Erfindung sind jeweils der Gegenstand der Unteransprüche.

Der erfindungsgemäß aufgebaute Kommutatormotor erlaubt trotz kleiner Baugröße und der damit gegebenen Notwendigkeit einer Verlegung der Entstörmittel und der Anschlußstecker nach außerhalb des Motorgehäuses die Kontaktierung dieser Teile untereinander und deren Verbindung mit der Bürstenapparatur in feuchtigkeitsgeschützter Weise, wobei sämtliche in der Bürstenbrücke bzw. dem einstückig angeformten Steckergehäuse zu montierenden und kontaktierenden Bauteile in nur einer nämlich der montageraumsparenden axialen Handhabungsrichtung auf einfache Weise zugeführt werden können.

Ein zusätzlicher Schutz der Bürstenapparatur ist dadurch möglich, daß an die Bürstenbrücke eine in Umfangsrichtung entlang der Innenwandung des Motorgehäuses verlaufende, die gesamte Bürstenapparatur nach außen feuchtigkeitsschützende Abdeckhülse angeformt ist, an die gegebenenfalls noch stirnseitig eine Stirnkappe als Schutz vor gegebenenfalls lagerschildseitig eindringender Flüssigkeit aufgesteckt werden kann; durch diese Maßnahme wird eindringende Feuchtigkeit in jedem Fall von der Bürstenapparatur abgeleitet und kann dann gegebenenfalls durch eine an der tiefsten Stelle des Motorgehäuses vorgesehene Öffnung wieder abfließen, ohne daß die Bürstenapparatur Schaden nimmt.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

Fig. 1 einen axialen Längsschnitt durch einen Pumpen-Kommutatormotor für ein Hydrauliksystem;

Fig. 2 eine stirnseitige Draufsicht auf eine Bürstenbrücke mit einstückig angeformtem Steckergehäuse;

Fig. 3 die Anordnung gemäß Fig.2 im Schnittverlauf II-II;

Fig. 4 eine Ansicht der Anordnung gemäß Fig.3 in Richtung Z;

Fig. 5 eine weitere Ausgestaltung der Anordnung gemäß Fig.2 im Schnittverlauf II-II;

Fig. 6 eine vormontierte, aus Anschlußsteckern, Entstörmitteln und Bürstenhaltern bestehende Montageeinheit;

Fig. 7 eine stirnseitige Draufsicht auf eine zum Verschluß der Beschickungsöffnungen des Steckergehäuses vorgesehene Abdeckkappe;

Fig. 8 die Anordnung nach Fig.7 im Schnittverlauf VIII-VIII.

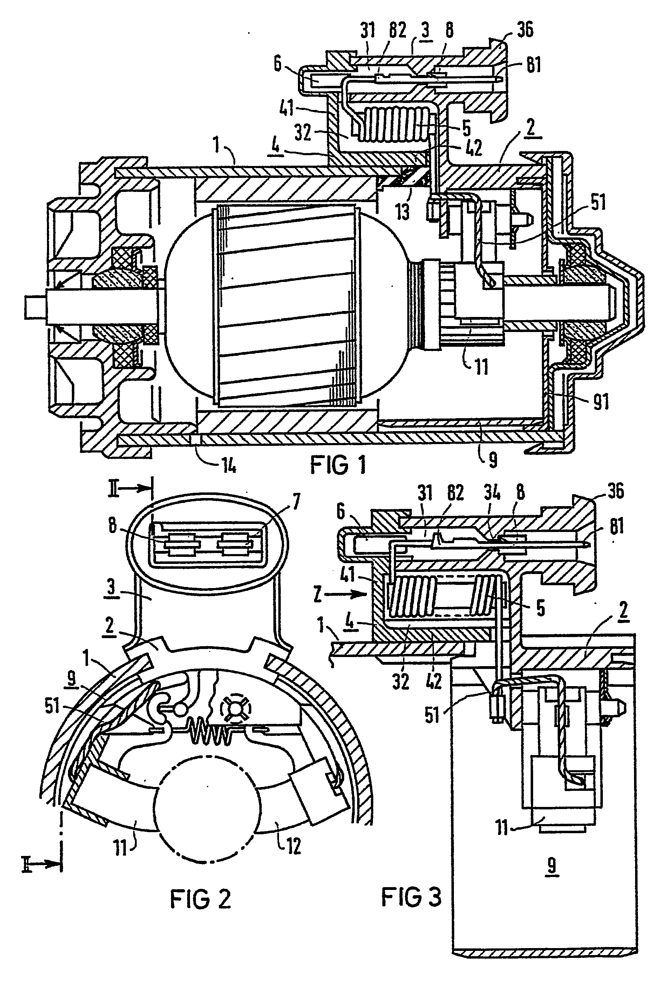

Fig.1 zeigt in einem axialen Längsschnitt einen Kommutatormotor zum Antrieb eines Hydrauliksystems. In hier nicht näher dargestellter, z.B. durch die eingangs erwähnte DE-B1 bekannten Art, ist in einen stirnseitig offenen axialen Längsschlitz des Gehäuses 1 von der rechten Stirnseite eine in den Figuren 2-5 vergrößert dargestellte Bürstenbrücke 2 mit einem einstückig angeformten, radial die Öffnung des Gehäuses 1 überragenden Steckergehäuse 3 im Paßsitz eingeschoben und durch das rechts gegengelegte Lagerschild fixiert.

In dem das Motorgehäuse 1 radial überragenden Steckergehäuse 3 sind drei Taschen 31; 32 bzw.33 eingeformt, die an ihrem linken Ende eine durch eine Abdeckkappe 4 verschließbare Beschickungsöffnung derart aufweisen, daß z.B. in die Tasche 31 Anschlußstecker 7,8 und ein Kondensator 6 und in die Tasche 32 eine Entstördrossel 5 axial einschiebbar sind. Zur Leitungsverlegung der Anschlußleitungen 51,61 von den inneren Anschlußenden 72,82 der Anschlußstecker 7,8 zu der Entstördrossel 5 bzw. zu den Kohlebürsten 11,12 weisen die Taschen radiale Leitungsöffnungen auf. Wie insbes. aus Fig.3 ersichtlich, sind die Leitungsöffnungen für die Anschlußleitungen 51,61 am rechten Ende der Tasche 32; 33 verlegt und bis zur linken Beschickungsöffnung geschlitzt, so daß die Verbindungsleitungen 51,61 ebenfalls axial durch die geschlitzten Leitungsöffnungen einschiebbar sind. Die von den inneren Anschlußenden 72,82 von der ersten Tasche 31 zu den Taschen 32 bzw.33 verlaufenden Verbindungsleitungen 51, 61 sind am linken Ende der Beschickungsöffnung direkt stirnseitig vor dem Wandteil zwischen der Tasche 31 einerseits und den Taschen 32 bzw.33 verlegt.

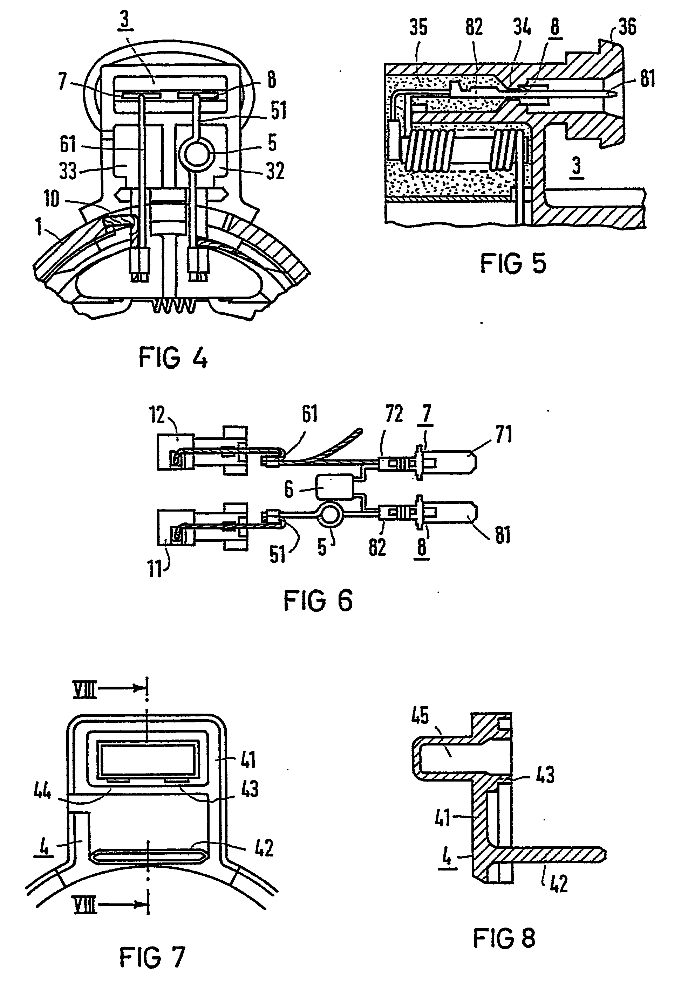

In vorteilhafter Weise ist vorgesehen, daß - wie aus Fig.6 ersichtlich - die Anschlußstecker 7,8 sowie die Entstörmittel 5,6 und die Bürstenhalterungen mit den Kohlebürsten 11,12 als vormontierte Handhabungseinheit mit den gegenseitigen Verbindungsleitungen 51,61 und dem zu den Anschlußsteckern 7,8 parallel geschalteten Kondensator 6 in die Bürstenbrücke 2 bzw. das Steckergehäuse 6 axial über die offene Beschickungsöffnungen einsteckbar sind, wobei die rechten äußeren Anschlußenden 71,81 der Anschlußstecker 7,8 durch der Beschickungsöffnung gegenüberliegende Wandteile 34 des Steckergehäuses 3 durchgesteckt werden. Wie insbes. aus Fig.3 bzw.Fig.5 ersichtlich, reichen die äußeren Anschlußenden 71,81 der Anschlußstecker 7,8 in ein nach außen offenes Steckeranschlußteil 36, auf das ein mit einer äußeren Anschlußleitung versehener Stecker aufrastbar ist.

Zum dichtenden Abschluß des Steckergehäuses 3 nach der Bestückung mit der in Fig.6 dargestellten Handhabungseinheit wird entweder gemäß Fig.3 eine aus einem Deckelteil 41 und einem Stegteil 42 bestehende einstückige Abdeckkappe 4 dichtend aufgesetzt oder gemäß Fig.5 der Innenraum der bestückten Taschen 31,32 bzw.33 mit einer Vergußmasse 35 ausgefüllt.

Die Figuren 7,8 zeigen Details der zum Verschluß der Beschickungsöffnungen und der zur Beschickungsöffnung hin geschlitzten Leitungsöffnungen vorgesehenen Abdeckkappe 4 auf. Die Abdeckkappe 4 besteht aus einem Deckelteil 41, der stirnseitig die Beschickungsöffnungen verschließt und einem angeformten Nockenteil 42, der die zur Beschickungsöffnung hin geschlitzten Leitungsöffnungen bis zu den am Ende durchgeführten Verbindungsleitungen verschließt. Im oberen Teil des Deckelteils 41 der Abdeckkappe 4 ist eine nach außen vorstehende Griffaufnahme angeformt, die in vorteilhafter Weise innen gleichzeitig zur Aufnahme des Kondensators 6 mitbenutzt wird. Zur besonders guten Abdichtung durch die Abdeckkappe 4 ist nach einer Ausgestaltung der Erfindung eine Ultraschallverschweißung der Abdeckkappe 4 zumindest im Bereich ihres an der Stirnseite der Abdecköffnung der Tasche 31 anliegenden Wandbereichs vorgesehen.

Wie aus Fig.7 ersichtlich, weist der Deckelteil 41 dünne, axial vorstehende Lippen 43, 44 im Bereich der bei betriebsmäßiger Montage gegenliegenden, von der Tasche 31 in die Taschen 32 bzw.33 durchgeführten Verbindungsleitungen 51,61 auf. Die Lippen 43, 44 stehen vor dem Ultraschweißen soweit vor, daß die Verbindungsleitungen 51,61 gegen die Wandungen der Tasche 31 bzw. der Taschen 32 bzw.33 angedrückt werden, jedoch die Abdeckkappe 4 mit ihrem umlaufenden Rand noch nicht gegen die Stirnseite des Steckergehäuses 3 im Bereich der Beschickungsöffnung zur Anlage kommen kann. Bei der zunehmenden Erwärmung während des Ultraschweißvorganges werden dann durch den axialen Druck, mit dem die Abdeckkappe 4 gegen die Stirnseite des Steckergehäuses 3 angedrückt wird, die Lippen 43,44 und die gegenüberliegenden Wandteile des Steckergehäuses 3 derart erweicht, daß sie sich dicht schließend um die Verbindungsleitungen 51,61 herumlegen, während die Abdeckkappe 4 ihre Anlage-Endposition an der Stirnseite des Steckergehäuses 3 erreicht.

Zur Abdichtung zwischen dem Motorgehäuse 1 und den durch den Stegteil 42 der Abdeckkappe 4 und dem Steckergehäuse 1 durchgeführten Verbindungsleitungen 51,61 ist - wie aus Fig.1 ersichtlich - nach einer Ausgestaltung eine quetschbare Dichtung 13 zwischengelegt. Sollte trotzdem Feuchtigkeit in das Innere des Gehäuses 1 eindringen, so wird ein zusätzlicher Schutz der Bürstenapparatur durch eine an die Bürstenbrücke 3 einstückig angeformte, innen in geringem Abstand zum Motorgehäuse 1 verlaufenden Abdeckhülse 9 erreicht, die zusätzlich durch eine stirnseitig aufsteckbare Stirnkappe 91 gegen lagerschildseitigen Feuchtigkeitseinbruch schützbar ist. Die gegebenenfalls eingedrungene Feuchtigkeit kann an der Unterseite des Motorgehäuses 1 durch eine Öffnung 14 abfließen.

In fertigungstechnisch besonders einfacher Weise kann eine zur Entstörung notwendige, mit ihrem einen Ende an die Verbindungsleitung 61 angeschlossene Entstörmasseleitung 10 dadurch in besonders einfacher Weise mit dem Gehäuse 1 elektrisch verbunden und dichtend eingeführt werden, daß sie als flexible Leitung allein durch Zwischenklemmen zwischen der Wandung des Motorgehäuses 1 im Bereich der Öffnung einerseits und der im Paßsitz in die Öffnung einsetzbaren Bürstenbrücke 3 andererseits kontaktiert ist.

**Patentansprüche**

1. Kommutatormotor in geschlossener Bauart, insbesondere Pumpenmotor, mit in eine Öffnung des Motorgehäuses (1) im Preßsitz axial einsetzbarer Kunststoff-Bürstenbrücke (2) mit einstückig angeformtem Steckergehäuse (3) mit nach außen herausragenden, durch eine Steckergehäusewand mit ihren äußeren Anschlußenden durchsteckbaren Anschlußsteckern (7, 8), deren in das Steckergehäuse (3) reichenden inneren Anschlußenden (72, 82) über Entstörmittel (6, 7) mit in Bürstenhaltern der Bürstenbrücke (2) angeordneten Kohlebürsten (11, 12) verbunden sind, gekennzeichnet durch folgende Merkmale:

a) In das Steckergehäuse (3) sind zumindest zwei Taschen (31; 32 bzw.33) mit einer Beschickungsöffnung in der einen axialen Richtung und einer zur Beschickungsöffnung radialen, geschlitzten Leitungsöffnung eingeformt;

b) in die erste Tasche (31) sind zumindest die Anschlußstecker (7, 8) mit ihren inneren Anschlußenden (72, 82) von der Beschickungsöffnung her ein- und mit ihren äußeren Anschlußenden (71, 81) durch eine der Beschickungsöffnung gegenüberliegenden Wand (34) in der anderen axialen Richtung nach außen durchgesteckt;

c) in der zweiten Tasche ist zumindest ein Entstörmittel (Drosselspule 5) von der Beschickungsöffnung her eingesteckt und über je eine radiale Leitungsöffnung mit einem inneren Anschlußende (82) des Anschlußsteckers (8) und mit einer Kohlebürste (11) verbunden;

d) die axialen Beschickungsöffnungen und radialen Leitungsöffnungen sind durch eine am Steckergehäuse (3) befestigbare Abdeckkappe (4) axial verschließbar.

2. Kommutatormotor nach Anspruch 1, **dadurch gekennzeichnet**, daß die Abdeckkappe (4) einen ersten, die Beschickungsöffnung verschließenden Deckelteil (41) und einen zweiten, daran angeformten, die Leitungsöffnungen mit den durchgeführten Anschlußleitungen (51, 61) abschließenden Stegteil (42) aufweist.

3. Kommutatormotor nach Anspruch 1 und/oder 2, **dadurch gekennzeichnet**, daß die Abdeckkappe (4) zumindest im Bereich der ersten Tasche (31) mit dieser allseitig dichtend ultraschallverschweißt ist.

4. Kommutatormotor nach Anspruch 2 und/oder 3, **dadurch gekennzeichnet**, daß im Bereich der Leitungsöffnungen der ersten Tasche (31) die durchgeführten Anschlußleitungen (51, 61) durch Anschmelzen des andrückenden Stegteils (41) bzw. Wandteils der Tasche (31) dicht eingeschlossen sind.

5. Kommutatormotor nach zumindest einem der Ansprüche 1 bis 4, **dadurch gekennzeichnet**, daß im Bereich der Leitungsöffnungen der zweiten Tasche (32 bzw.33) eine Dichtung (13) zwischen dem Steckergehäuse (3) und dem Motorgehäuse (1) zwischengelegt ist.

6. Kommutatormotor in geschlossener Bauart, insbesondere Pumpenmotor, mit in eine Öffnung des Motorgehäuses (1) im Preßsitz axial einsetzbarer Kunststoff-Bürstenbrücke (2) mit einstückig angeformtem Steckergehäuse (3) mit nach außen herausragenden, durch eine Steckergehäusewand mit ihren äußeren Anschlußenden durchsteckbaren Anschlußsteckern (7, 8), deren in das Steckergehäuse (3) reichenden inneren Anschlußenden (72, 82) über Entstörmittel (6, 7) mit in Bürstenhaltern der Bürstenbrücke (2) angeordneten Kohlebürsten (11, 12) verbunden sind, gekennzeichnet durch folgende Merkmale:

a) In das Steckergehäuse (3) sind zumindest zwei Taschen (31; 32 bzw.33) mit einer Beschickungsöffnung in der einen axialen Richtung und einer zur Beschickungsöffnung radialen, geschlitzten Leitungsöffnung eingeformt;

b) in die erste Tasche (31) sind zumindest die Anschlußstecker (7, 8) mit ihren inneren Anschlußenden (72, 82) von der Beschickungsöffnung her ein- und mit ihren äußeren Anschlußenden (71, 81) durch eine der Beschickungsöffnung gegenüberliegenden Wand (34) in der anderen axialen Richtung nach außen durchgesteckt;

c) in der zweiten Tasche ist zumindest ein Entstörmittel (Drosselspule 5) von der Beschickungsöffnung her eingesteckt und über je eine radiale Leitungsöffnung mit einem inneren Anschlußende (82) des Anschlußsteckers (8) und mit einer Kohlebürste (11) verbunden;

d) die axialen Beschickungsöffnungen und radialen Leitungsöffnungen sind durch Ausgießen der Taschen (31; 32 bzw.33) durch eine Vergußmasse (35) verschließbar.

7. Kommutatormotor nach zumindest einem der Ansprüche 1 bis 6, **dadurch gekennzeichnet**, daß an die Bürstenbrücke (3) eine in Umfangsrichtung entlang der Innenwandung des Motorgehäuses (1) verlaufende, die gesamte Bürstenapparatur schützend umschließende Abdeckhülse (9) angeformt ist.

8. Kommutatormotor nach Anspruch 7, **dadurch gekennzeichnet**, daß die Abdeckhülse (9) stirnseitig durch eine axial aufsteckbare Stirnkappe (91) noch weiter verschließbar ist.

9. Kommutatormotor nach zumindest einem der Ansprüche 1 bis 8, **dadurch gekennzeichnet**, daß das freie Ende einer an eine Anschlußleitung (51) angeschlossenen flexiblen Entstörmasseleitung (10) allein durch Zwischenklemmen zwischen der Wandung des Motorgehäuses (1) im Bereich der Öffnung einerseits und der im Preßsitz in die Öffnung einsteckbaren Bürstenbrücke (3) andererseits mit dem Motorgehäuse (1) kontaktiert ist.

10. Kommutatormotor nach zumindest einem der Ansprüche 1 bis 9, **dadurch gekennzeichnet**, daß zumindest die Anschlußstecker (7,8) und die über die Anschlußleitungen (51,61) daran angeschlossenen Entstörmittel (Entstördrossel 5, Kondensator 6) und Kohlebürsten (11,12) Teile eines vormontierten Handhabungsteils sind und axial durch die Beschickungsöffnung bzw. geschlitzte Leitungsöffnung in die Taschen (31,32 bzw.33) der Bürstenbrücke einsteckbar sind.

**Claims**

1. Commutator motor of the enclosed type of construction, more particularly pump motor, having plastics brush yoke (2), which can be inserted axially into an opening of the motor housing (1) with press fit, and has integral therewith in one piece plug housing (3), having connection plugs (7, 8), which project outwards and the outer connection ends of which may be inserted through a plug housing wall and the inner connection ends (72, 82) of which, reaching into the plug housing (3), are connected, by way of radio interference suppressing means (6, 7), with carbon brushes (11, 12) which are arranged in brush holders of the brush yoke (2), characterised by the following features:

a) at least two pockets (31; 32 or 33) with a feed opening in the one axial direction and a slotted conductor opening radial to the feed opening are formed in the plug housing (3);

b) at least the inner connection ends (72, 82) of the connection plugs (7, 8) are inserted into the first pocket (31) from the feed opening and their outer connection ends (71, 81) are inserted through a wall (34), which lies opposite the feed opening, in the other axial direction outwards;

c) at least one radio interference suppressing means (choke coil 5) is inserted into the second pocket from the feed opening and is connected by way of a respective radial conductor opening with an inner connection end (82) of the connection plug (8) and with a carbon brush (11);

d) the axial feed openings and radial conductor openings can be sealed axially by means of a cover cap (4) which can be secured to the plug housing (3).

2. Commutator motor according to claim 1, characterised in that the cover cap (4) has a first closure portion (41) which seals the feed opening and a second flange portion (42) which is integral therewith and which closes the conductor openings with the connection conductors (51, 61) which are guided through them.

3. Commutator motor according to claim 1 and/or 2, characterised in that the cover cap (4) is ultrasonically welded, at least in the region of the first pocket (31), to the latter such that there is an all-round seal.

4. Commutator motor according to claim 2 and/or 3, characterised in that the through-guided connection conductors (51, 61) are tightly enclosed in the region of the conductor openings of the first pocket (31) by melting thereon the pressed-on flange portion (41) or wall portion of the pocket (31) respectively.

5. Commutator motor according to at least one of the claims 1 to 4, characterised in that a seal (13) is laid between the plug housing (3) and the motor housing (1) in the region of the conductor openings of the second pocket (32 or 33).

6. Commutator motor of the enclosed type of construction, more particularly pump motor, having plastics brush yoke (2), which can be inserted axially into an opening of the motor housing (1) with press fit, and has integral therewith in one piece plug housing (3), having connection plugs (7, 8), which project outwards and the outer connection ends of which may be inserted through a plug housing wall and the inner connection ends (72, 82) of which, reaching into the plug housing (3), are connected, by way of radio interference suppressing means (6, 7), with carbon brushes (11, 12) which are arranged in brush holders of the brush yoke (2), characterised by the following features:

a) at least two pockets (31; 32 or 33) with a feed opening in the one axial direction and a slotted conductor opening radial to the feed opening are formed in the plug housing (3);

b) at least the inner connection ends (72, 82) of the connection plugs (7, 8) are inserted into the first pocket (31) from the feed opening and their outer connection ends (71, 81) are inserted through a wall (34), which lies opposite the feed opening, in the other axial direction outwards;

c) at least one radio interference suppressing means (choke coil 5) is inserted into the second pocket from the feed opening and is connected by way of a respective radial conductor opening with an inner connection end (82) of the connection plug (8) and with a carbon brush (11);

d) the axial feed openings and radial conductor openings can be sealed by packing the pockets (31; 32 or 33) with a casting compound (35).

7. Commutator motor according to at least one of the claims 1 to 6, characterised in that there is integral with the brush yoke (3) a cover sleeve (9) which extends in the peripheral direction along the inner wall of the motor housing (1) and which surrounds the whole brush apparatus in a protective manner.

8. Commutator motor according to claim 7, characterised in that the cover sleeve (9) can be further sealed on the end face by means of an end cap (91) which can be pushed thereon axially.

9. Commutator motor according to at least one of the claims 1 to 8, characterised in that the free end of a flexible radio interference suppressing earth conductor (10), which is connected to a connection conductor (51), is contacted with the motor housing (1) solely by means of intermediate clamping between the wall of the motor housing (1) in the region of the opening, on the one hand, and the brush yoke (3), which can be inserted into the opening with press fit, on the other hand.

10. Commutator motor according to at least one of the claims 1 to 9, characterised in that at least the connection plugs (7, 8) and the radio interference suppressing means (radio interference suppressing choke 5, capacitor 6), connected thereto by way of the connection conductors (51, 61), and carbon brushes (11, 12) are parts of a preassembled handling part and can be inserted axially through the feed opening and slotted conductor opening into the pockets (31, 32 or 33) of the brush yoke.

**Revendications**

1. Moteur à collecteur du type de construction fermé, notamment moteur de pompe, comportant un collier en matière plastique (2) de support des balais, pouvant être inséré axialement selon un ajustement serré dans une ouverture de la carcasse (1) du moteur et comportant un boîtier à chevilles (3) moulé d'un seul tenant et comportant des chevilles de raccordement (7, 8), qui peuvent être enfichées à travers la paroi du boîtier à chevilles, au moyen de leurs extrémités extérieures de raccordement, et dont les extrémités intérieures de raccordement (72, 82), qui pénètrent dans le boîtier à chevilles (3), sont reliées par l'intermédiaire de moyens d'antiparasitage (6, 7), à des balais en charbon (11, 12) montés dans des porte-balais du collier (2) de support des balais, remarquable par les caractéristiques suivantes :

a) dans le boîtier à chevilles (3) sont disposés au moins deux logements (31; 32 ou 33) formés par moulage et comportant une ouverture d'équipement s'étendant dans une direction axiale et une ouverture fendue de passage de conducteurs, qui s'étend radialement par rapport à l'ouverture d'équipement;

b) au moins les chevilles de raccordement (7, 8) sont enfichées à leurs extrémités intérieures de raccordement (72, 82) dans le premier logement (31), à partir de l'ouverture de chargement et traversent en direction de l'extérieur, dans l'autre direction axiale, par leurs extrémités extérieures de raccordement (71, 81), une paroi (34) située à l'opposé de l'ouverture de chargement;

c) au moins un dispositif d'antiparasitage (bobine d'arrêt 5) est enfiché dans le second logement à partir de l'ouverture d'équipement et est relié, par l'intermédiaire d'une ouverture radiale respective de passage des conducteurs, à une extrémité intérieure de raccordement (82) de la fiche de raccordement (8) et à un balai en charbon (11);

d) les ouvertures axiales d'équipement et les ouvertures radiales de passage des conducteurs peuvent être fermées axialement par un capot de fermeture (4) pouvant être fixé sur le boîtier à chevilles (3).

2. Moteur à collecteur suivant la revendication 1, caractérisé par le fait que le capot de fermeture (4) possède un premier élément formant couvercle (41), qui ferme l'ouverture de chargement, et un second élément en forme de barrette (42), moulé sur le premier élément et fermant l'ouverture de passage des conducteurs traversée par les conducteurs de raccordement (51, 61).

3. Moteur à collecteur suivant la revendication 1 et/ou 2, caractérisé par le fait qu'au moins dans la zone du premier logement (31), le capot de fermeture (4) est soudé par ultrasons d'une manière étanche de tous côtés sur ce logement.

4. Moteur à collecteur selon la revendication 2 et/ou 3, caractérisé par le fait que dans la zone des ouvertures de passage des conducteurs du premier logement (31), les conducteurs de raccordement traversant (51, 61) sont scellés de façon étanche par fixation par fusion de l'élément en forme de barrette (41), appliquant une compression, ou d'un élément de paroi du logement (31).

5. Moteur à collecteur suivant au moins l'une des revendications 1 à 4, caractérisé par le fait que dans la zone des ouvertures de passage des conducteurs du second logement (32 ou 33), une garniture d'étanchéité (13) est intercalée entre le boîtier à chevilles (3) et la carcasse (1) du moteur.

6. Moteur à collecteur de type de construction fermé, notamment moteur de pompe, comportant un collier en matière plastique (2) de support des balais, pouvant être inséré axialement selon un ajustement serré dans une ouverture de la carcasse (1) du moteur et comportant un boîtier à chevilles (3) moulé d'un seul tenant et comportant des chevilles de raccordement (7, 8), qui peuvent être enfichées à travers la paroi du boîtier à chevilles, au moyen de leurs extrémités extérieures de raccordement, et dont les extrémités intérieures de raccordement (72, 82), qui pénètrent dans le boîtier à chevilles (3), sont reliées par l'intermédiaire de moyens d'antiparasitage (6, 7), à des balais en charbon (11, 12) montés dans des porte-balais du collier (2) de support des balais, caractérisé par les caractéristiques suivantes :

a) dans le boîtier à chevilles (3) sont disposés au moins deux logements (31; 32 ou 33) formés par moulage et comportant une ouverture d'équipement s'étendant dans une direction axiale et une ouverture fendue de passage de conducteurs, qui s'étend radialement par rapport à l'ouverture d'équipement;

b) au moins les chevilles de raccordement (7, 8) sont enfichées à leurs extrémités intérieures de raccordement (72, 82) dans le premier logement (31), à partir de l'ouverture d'équipement et traversent en direction de l'extérieur, dans l'autre direction axiale, par leurs extrémités extérieures de raccordement (71, 81), une paroi (34) située à l'opposé de l'ouverture d'équipement;

c) au moins un dispositif d'antiparasitage (bobine d'arrêt 5) est enfiché dans le second logement à partir de l'ouverture d'équipement et est relié, par l'intermédiaire d'une ouverture radiale respective de passage des conducteurs, à une extrémité intérieure de raccordement (82) de la fiche de raccordement (8) et à un balai en charbon (11);

d) les ouvertures axiales de chargement et les ouvertures radiales de passage des conducteurs peuvent être fermées au moyen de la coulée d'une masse d'obturation (35) dans les logements (31; 32 ou 33).

7. Moteur à collecteur suivant au moins l'une des revendications 1 à 6, caractérisé par le fait qu'une douille de protection (9), qui s'étend dans la direction périphérique le long de la paroi intérieure de la carcasse (1) du moteur et entoure, de manière à le protéger, l'ensemble du système des balais, est moulée sur le collier (3) de support des balais.

8. Moteur à collecteur suivant la revendication 7, caractérisé par le fait que la douille de protection (9) peut être fermée frontalement, d'une manière supplémentaire, par un capot frontal (91) pouvant être enfiché axialement.

9. Moteur à collecteur suivant au moins l'une des revendications 1 à 8, caractérisé par le fait que l'extrémité libre d'un conducteur flexible de masse d'un antiparasitage (10), raccordé à un conducteur de raccordement (51), est raccordée à la carcasse (1) du moteur, uniquement en étant serrée entre, d'une part, la paroi de la carcasse (1) du moteur, dans la zone de l'ouverture, et, d'autre part, le collier (3) de support des balais, qui peut être enfiché avec un ajustement serré dans l'ouverture.

10. Moteur à collecteur suivant au moins l'une des revendications 1 à 9, caractérisé par le fait qu'au moins les chevilles de raccordement (7, 8) et les moyens d'antiparasitage (bobine d'arrêt d'antiparasitage 5, condensateur 6) et les porte-balais (11, 12), qui sont raccordés aux chevilles par l'intermédiaire des conducteurs de raccordement (51, 61), font partie d'un ensemble de manipulation préassemblé et peuvent être enfichés axialement, à travers l'ouverture d'équipement ou l'ouverture fendue de passage des conducteurs, dans les logements (31, 32 ou 33) du collier de support des balais.

EP 0 221 304 B1

FIG 1

FIG 2

FIG 3

FIG 4

FIG 5

FIG 6

FIG 7

FIG 8